(19) Europäisches Patentamt
European Patent Office
Office européen des brevets

(11) **EP 3 492 635 B1**

(12) **EUROPEAN PATENT SPECIFICATION**

(45) Date of publication and mention
of the grant of the patent:
**17.02.2021  Bulletin 2021/07**

(51) Int Cl.:
***D01F 6/04*** *(2006.01)*        ***D01F 8/06*** *(2006.01)*
***D02J 1/22*** *(2006.01)*        ***D01D 5/34*** *(2006.01)*

(21) Application number: **17834524.5**

(22) Date of filing: **28.07.2017**

(86) International application number:
**PCT/JP2017/027409**

(87) International publication number:
**WO 2018/021522 (01.02.2018 Gazette 2018/05)**

(54) **POLYOLEFIN FIBER AND METHOD FOR PRODUCING SAME**

POLYOLEFINFASER UND VERFAHREN ZUR HERSTELLUNG DAVON

FIBRE DE POLYOLÉFINE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.07.2016   JP 2016149137**
**18.01.2017   JP 2017006438**

(43) Date of publication of application:
**05.06.2019   Bulletin 2019/23**

(73) Proprietor: **Mitsubishi Chemical Corporation
Tokyo 100-8251 (JP)**

(72) Inventors:
• **FUJIE, Masaki**
**Tokyo 100-8251 (JP)**
• **TAKATA, Masayuki**
**Tokyo 100-8251 (JP)**
• **YAMASHITA, Tomoyoshi**
**Tokyo 100-8251 (JP)**
• **IKEDA, Hironobu**
**Tokyo 100-8251 (JP)**
• **IMAKITA, Junya**
**Tokyo 100-8251 (JP)**

(74) Representative: **Hoffmann Eitle
Patent- und Rechtsanwälte PartmbB
Arabellastraße 30
81925 München (DE)**

(56) References cited:
EP-A2- 0 518 316        JP-A- S57 128 212
JP-A- 2000 160 428      JP-A- 2001 049 521
JP-A- 2002 020 926      JP-A- 2004 292 980
JP-A- 2014 129 198      JP-A- 2014 196 577

• KUMAR S ET AL: "Fibers from polypropylene/nano carbon fiber composites", POLYMER, ELSEVIER SCIENCE PUBLISHERS B.V, GB, vol. 43, no. 5, 1 March 2002 (2002-03-01), pages 1701-1703, XP004312503, ISSN: 0032-3861, DOI: 10.1016/S0032-3861(01)00744-3
• A R West: "Compressive strength and glass transition temperature", JOURNAL OF MATERIALS SCIENCE, 1 January 1981 (1981-01-01), pages 2025-2028, XP055596796, Retrieved from the Internet: URL:https://link.springer.com/content/pdf/10.1007/BF00540658.pdf [retrieved on 2019-06-14]

EP 3 492 635 B1

## Description

Technical Field

The present invention relates to a polyolefin fiber used for industrial materials, interior for buildings and automobiles, medical and health care, clothing and the like and a method for producing same as defined in the claims.

Background Art

Since a polyolefin fiber including a polypropylene fiber has excellent features such as water repellency, non-water absorbability, chemical resistance, lightness due to its low specific gravity, high recyclability and the like, it is extensively used for industrial materials, interior for buildings and automobiles, medical and health care, and the like. Especially in industrial material applications, it is widely used for such as a rope, a curing net, a safe net for construction and the like, making use of its lightness and strength, however, strengthening of the fiber is required for further weight saving.

On the other hand, in order to obtain a product in which fibers are used in a curved or bent state with each other, such as a rope, a net, a woven fabric or a filter cloth, using a polyolefin fiber including a polypropylene fiber, it is desired to obtain a polypropylene fiber having high knot strength and loop strength as well as tensile strength for further improvement in reliability and durability of the products.

Regarding a general polyolefin fiber including a polypropylene fiber and a polyester fiber, as molecular chains are highly oriented in a length direction of a fiber axis, the fibers become extremely weak against the stress in a perpendicular direction to the fiber axis, which makes it easier to fibrillate. Therefore, an abrasion resistance tends to be lowered. Accordingly, a fiber which is difficult to fibrillate is desired.

In Patent Document 1, for example, it is proposed that an undrawn yarn to be obtained by melt spinning a mixture of a crystalline polypropylene resin having a melt mass flow rate of 0.1 to 10 g/10 min and a crystalline polypropylene resin having a melt mass flow rate of 10 to 40 g/10 min is drawn at a drawing temperature of 120 to 180 °C by using a drawing tank in which pressurized steam is placed as a drawing medium in a container sealed with pressurized water at both ends to obtain a polypropylene fiber having a knot strength of 8 g/d or higher.

However, this method requires a special and expensive pressurized saturated steam drawing apparatus as compared with an ordinary roll drawing, a hot plate drawing and the like. Further, in the pressurized saturated steam drawing, the fiber input is limited to cause a low production speed, therefore, it is not suitable for mass production.

In Patent Document 2, for example, a composite fiber suitable for a safety net having a strength at break of 8.5 g/d or higher and an elongation at break of 15 % or higher, as a core-sheath composite fiber using a polyester for a core part and a polyamide in which an inorganic material is added for a sheath part is proposed. It is reported that the safety net using the composite fiber has an excellent strength elongation, shock absorbing property, dimensional stability, light resistance and abrasion resistance.

However, since the fiber has a higher specific gravity than a polyolefin polymer, it is disadvantageous from the viewpoint of weight saving. The fiber is also a composite fiber formed of different kinds of polymers, therefore, there is a problem that recyclability is low.

Further relevant prior art information is found in KUMAR S ET AL: "Fibers from polypropylene/ nano carbon fiber composites",POLYMER, (vol. 43, no. 5, pages 1701-1703), and in EP0518316A2.

Prior Art Document

Patent Documents

Patent Document 1: JPH 11-269717 A
Patent Document 2: JPH 7-316927 A

Summary of Invention

Problems to be Solved by the Invention

An object of the present invention is to provide a polyolefin fiber, particularly a core-sheath composite polypropylene fiber which is possible to be easily deformed corresponding to a stress applied from a direction perpendicular to a fiber axis, to be less fibrillated, and to have an excellent knot strength. The polyolefin fiber having an excellent knot strength, particularly the core-sheath composite polypropylene fiber which is applicable to a rope, a net and the like and is highly recyclable can be provided.

Means for Solving the Problems

1. A polyolefin fiber in a form of a multifilament consisting of a plurality of single fibers, in which each of the fibers is made of a polyolefin having a weight-average molecular weight of 180,000 to 300,000, and has a compressive strength of 30 to 51 MPa calculated by the following formula 1 when compressed and deformed by 30 % with respect to a fiber diameter in a direction perpendicular to the fiber axis in each single fiber.

$$St=2P/(\pi \times L \times d)\ldots(\text{Formula 1})$$

St: Compressive strength (MPa), P: Testing force (N)
d: Single fiber diameter (mm), L : Diameter of indenter (mm)

2. The polyolefin fiber in a form of the multifilament consisting of the plurality of single fibers according to 1, in which a knot strength is 4 cN/dtex or higher and a tensile elongation at break is from 10 to 26 %.
3. The polyolefin fiber in a form of the multifilament consisting of the plurality of single fibers according to 1 or claim 2, in which each single fiber is a core-sheath composite fiber formed of a core part and a sheath part, a melt mass flow rate of the polyolefin resin in the sheath part is from 10 to 60 g/10 min, a melt mass flow rate of the polyolefin resin in the core part is smaller than the melt mass flow rate of the polyolefin resin in the sheath part, and a difference between the melt mass flow rate of the polyolefin resin in the core part and the melt mass flow rate of the polyolefin resin in the sheath part is from 4 to 45 g/10 min.
4. The polyolefin fiber according to any one of 1 to 3, in which a loop strength is from 4 to 8 cN/dtex.
5. The polyolefin fiber according to any one of 1 to 4, in which a single fiber fineness is from 3 to 25 dtex, and a total fineness is from 50 to 2000 dtex.
6. The polyolefin fiber according to any one of 1 to 5, in which a tensile strength is 6 cN/dtex or higher, an initial tensile elastic modulus is 70 cN/dtex or higher, and a knot elongation at break is from 5 to 20 %.
7. The polyolefin fiber according to any one of 3 to 6, in which an area ratio in the core part in a cross section perpendicular to the fiber axis of the core-sheath composite fiber is from 50 to 90 %.
8. A rope containing 80 mass % or more of the polyolefin fiber according to any one of 1 to 7.
9. A net containing 80 mass % or more of the polyolefin fiber according to any

Effects of the Invention

According to the present invention, it is possible to obtain a polypropylene fiber having a core-sheath composite structure which is possible to be easily deformed corresponding to a stress applied to a direction perpendicular to a fiber axis, to be less fibrillated, and to have an excellent knot strength and a high tensile strength. Such a polypropylene fiber is suitable for formed body such as a rope and a net.

Best Modes for Carrying Out the Invention

Hereinafter, the present invention will be described in detail.

<Polyolefin fiber>

The polyolefin fiber of the present invention is in a form of a multifilament consisting of a plurality of single fibers, in which each of the fibers is made of a polyolefin having a weight-average molecular weight of 180,000 to 300,000, and has a compressive strength of 30 to 51 MPa calculated by the following formula 1 when compressed and deformed by 30 % with respect to a fiber diameter in a direction perpendicular to the fiber axis in each single fiber.

$$St=2P/(\pi \times L \times d)\ldots(\text{Formula 1})$$

St: Compressive strength (MPa), P: Testing force (N)
d: Single fiber diameter (mm), L: Diameter of indenter (mm)

Since the fiber is a multifilament, it is possible to obtain a supple yarn as compared with a monofilament, and to achieve an effect of improving a handleability.

When the compressive strength is 30 MPa or higher, it is preferable from the viewpoint of improving the post-processing passability.

Further, when the compressive strength is 51 MPa or lower, it is possible to easily deform corresponding to a stress in a direction perpendicular to a fiber axis. Therefore, a processed product can be less fibrillated and suitably adopted for a rope, a net and the like. From these viewpoints, the compressive strength is more preferably from 40 to 51 MPa, and further preferably from 45 to 48 MPa.

It is preferable that the polyolefin fiber of the present invention is in a form of the multifilament consisting of the plurality of single fibers, a knot strength is 4 cN/dtex or higher, and the tensile elongation at break is from 10 to 26 %.

When the knot strength is 4 cN/dtex or higher, cutting at the knotted part can be reduced in a case of being used as a rope or a net. Further, it is industrially difficult to stably obtain a polyolefin multifilament having the knot strength of 7.0 cN/dtex or higher for high production. From this viewpoint, the knot strength is more preferably from 5 to 6.8 cN/dtex, and further preferably from 5.5 to 6.5 cN/dtex.

When the tensile elongation at break is 10 % or higher, process passability tends to be favorable when processing the polyolefin multifilament. When the tensile elongation at break is 26 % or lower, deformation of the final products is reduced, which leads to a stable production. From these viewpoints, the tensile elongation at break is more preferably from 15 to 25 %.

Regarding the polyolefin multifilament of the present invention, it is preferable to obtain an undrawn polyolefin filament by melting a single polyolefin resin having a melt mass flow rate (hereinafter also referred to as "MFR") [measured according to ASTM D1238 under conditions at a temperature of 230 °C, a load of 2.16 kg for 10 minutes] of 8 to 20 g/10 min and discharging it from discharge holes.

When the MFR is 8 g/10 min or larger, the melt viscosity does not become excessively high, and the moldability tends to be favorable. When the MFR is 20 g/10 min or smaller, the molecular weight of polypropylene does not become excessively small. Therefore, a polyolefin multifilament having high tensile strength and high knot strength can be easily obtained. From these viewpoints, the MFR is more preferably from 10 to 18 g/10 min.

An isotactic pentad ratio of the polyolefin resin used in the present invention is preferably from 94 % to 99 %. When it is 94 % or higher, the polyolefin multifilament tends to form a uniform crystal structure. On the other hand, when it is lower than 99 %, the polyolefin multifilament can be industrially obtained.

The molecular weight distribution of the polyolefin resin is preferably 5 or smaller. When the molecular weight distribution is 5 or smaller, the polyolefin multifilament tends to have a uniform crystal structure. Therefore, the fiber strength hardly decreases. The molecular weight distribution is more preferably 4 or smaller.

It is preferable that the polyolefin fiber of the present invention is in a form of the multifilament consisting of a plurality of single fibers, in which each single fiber is a core-sheath composite fiber formed of a core part and a sheath part, the MFR of the polyolefin resin in the sheath part is from 10 to 60 g/10 min, the MFR of the polyolefin resin in the core part is smaller than the MFR of the polyolefin resin in the sheath part, and a difference between the MFR of the polyolefin resin in the core part and the MFR of the polyolefin resin in the sheath part is from 4 to 45 g/10 min.

It is preferable that the core-sheath composite fiber is a two-component system formed of the core part and the sheath part from the viewpoint of being able to use a simple facility. Further, it is preferable to have a structure in which the sheath part is uniformly arranged concentrically with the core part from the viewpoint of quality stability of the fiber.

The sheath part may be formed of a single polyolefin resin or a mixture of a plurality of polyolefin resins as long as the MFR of the polyolefin resin is in a range of 10 to 60 g/10 min.

When the MFR of the sheath part is 10 g/10 min or larger, it is possible to easily deform corresponding to a stress in a direction perpendicular to a fiber axis and to be less fibrillated. When the MFR of the sheath part is 60 g/10 min or smaller, the molecular weight of the polypropylene resin does not become excessively small, thereby, the polyolefin fibers with high uniformity in the sheath part can be easily obtained. From these viewpoints, the MFR of the sheath part is more preferably from 13 to 45 g/10 min, and further more preferably from 15 to 40 g/10 min.

In the polyolefin fiber of the present invention, it is preferable that the MFR of the core part is smaller than the MFR of the sheath part, and the difference between the MFR of the sheath part and the MFR of the core part is from 4 to 45 g/10 min.

When the MFR of the core part is smaller than the MFR of the sheath part and the difference between the MFR of the sheath part and the MFR of the core part is 4 g/10 min or larger, polymer in the core part can be more highly oriented, and therefore the strength of the core-sheath composite fiber can be enhanced.

When the difference between the MFR of the core part and the MFR of the sheath part is 45 g/10 min or smaller, spinnability failure due to the viscosity difference can be reduced.

From these viewpoints, the difference between the MFR of the core part and the MFR of the sheath part is more preferably from 7 to 40 g/10 min.

In the polyolefin fiber of the present invention, it is preferable that the MFR of the core part is 1 to 20 g/10 min.

When the MFR of the core part is 1 g/10 min or larger, the melt viscosity does not become excessively high, and, the moldability tends to be favorable. When the MFR of the core part is 20 g/10 min or smaller, the molecular weight of the polymer does not become excessively small. Therefore, the polyolefin multifilament having high uniformity in the core part can be easily obtained. From these viewpoints, the MFR of the core part is more preferably from 5 to 18 g/10 min, and further more preferably from 8 to 15 g/10 min.

In the polyolefin fiber of the present invention, it is preferable that the core part and the sheath part are formed of the same polymer group.

It is preferable that the core part and the sheath part are formed of the same polymer group when considering recyclability.

The same polymer group means that both components of the core part and the sheath part are polypropylene resins or both components are polyethylene resins.

In the polyolefin multifilament of the present invention, it is preferable that a loop strength is from 4 cN/dtex to 8 cN/dtex.

When the loop strength is 4 cN/dtex or higher, cutting at the loop part can be reduced in a case of being used as a rope or a net. Although there is no upper limit of the loop strength, it is industrially difficult to obtain the polyolefin multifilament having the strength of 8 cN/dtex or larger. From these viewpoints, the loop strength is preferably from 4.5 cN/dtex to 6.5 cN/dtex.

In the polyolefin fiber of the present invention, it is preferable that a single fiber fineness is from 3 to 25 dtex.

When the single fiber fineness is 3 dtex or higher, process passability when processing tends to be favorable. Further, the abrasion resistance of the processed product tends to be also favorable, therefore, the fiber can be suitably used for a rope, a net and the like. When the single fiber fineness is 25 dtex or lower, the homogeneity of the structure in the fiber tends to be favorable, so that it is possible to easily obtain the polyolefin multifilament having a high strength, a high elastic modulus, and a high knot strength. From these viewpoints, the single fiber fineness is more preferably from 3.5 dtex to 20 dtex, and further more preferably from 4 dtex to 10 dtex.

When the polyolefin fiber of the present invention is in a form of a multifilament, it is preferable that the single fiber fineness is 3 to 25 dtex and a total fineness is 50 to 2000 dtex.

When the total fineness is 50 dtex or higher, the fiber can be suitably used for a rope and a net. When the total fineness is 2000 dtex or lower, a difference in the elongation between the filaments is reduced when drawing the fiber, which is preferable from a viewpoint of fiber strength. From these viewpoints, the total fineness is preferably from 120 dtex to 1700 dtex.

In the polyolefin fiber of the present invention, the weight-average molecular weight of polyolefin is from 180,000 to 300,000.

When the weight-average molecular weight is 180,000 or larger, polymer molecular chains become sufficiently long, so that tensile strength and knot strength are increased. When the weight-average molecular weight is 300,000 or smaller, melt viscosity becomes sufficiently low, so that moldability becomes easier. From these viewpoints, the weight-average molecular weight is more preferably from 180,000 to 250,000.

In the polyolefin fiber of the present invention, it is preferable that the tensile strength is 6 cN/dtex or higher, an initial tensile elastic modulus is 70 cN/dtex or higher, and a knot elongation at break is from 5 to 20 %.

When the tensile strength is 6 cN/dtex or higher, it is possible to use for a rope, a net and the like, and to achieve weight reduction, which is preferable. When the tensile strength is 8.5 cN/dtex or lower, it is desirable from the viewpoint that stable production is possible without any excessive drawing. From this viewpoint, the tensile strength is more preferably from 7.0 to 8.3 cN/dtex.

When the initial tensile elastic modulus is 70 cN/dtex or higher, it is possible to be suitably used for a rope, a net and the like, and to achieve weight reduction, which is preferable. In addition, when the initial tensile elastic modulus is 200 cN/dtex or lower, it is preferable from the viewpoint that stable production is possible without any excessive drawing.

When the knot elongation at break is 5 % or more, elongation as a molding is likely to increase when it is used for a rope or a net. When the knot elongation at break is 20 % or less, deformation of a formed product is reduced, which leads to a stable production. From these viewpoints, the knot elongation at break is preferably from 8 to 17 %.

In the polyolefin fiber of the present invention, it is preferable that an area ratio in the core part in a cross section perpendicular to the fiber axis of the core-sheath composite fiber is from 50 to 90 %.

When the area ratio in the core part is 50 % or higher, it is advantageous in that a high strength polyolefin multifilament is easily obtained. When the area ratio in the core part is 90 % or less, it is possible to expect an effect of suppressing fibrillation.

It is preferable that the polyolefin fiber of the present invention is a polypropylene fiber.

Since polypropylene fiber has a higher melting point than polyethylene resin, it can prevent melt breakage due to abrasion when used for a rope or a net.

When the polyolefin fiber of the present invention is doubled, it is preferable that the total fineness is from 1000 dtex to 20000 dtex. The doubling may be carried out before drawing or after drawing.

When the total fineness after doubling is 1000 dtex or higher, the yarn can be used suitably for a rope or a net. When the total fineness after doubling is 20000 dtex or lower, bundling of the filament as a product is enhanced, which is preferable from the viewpoint of product strength. From these viewpoints, the total fineness is preferably from 2000 dtex to 10000 dtex.

<Method for Producing Polyolefin Fiber>

In a method for producing a polyolefin fiber of the present invention, the method including: drawing an undrawn polyolefin multifilament at a temperature of 130 to 180 °C, a total draw ratio of 5.5 to 10.5 times, and a deformation rate of the filament at the time of drawing of 1 (1/Sec) to 15 (1/sec), and the fiber has a single fiber fineness of 3 to 25 dtex and a tensile elongation at break of 10 to 26 %.

In the method for producing the polyolefin fiber of the present invention, it is preferable that the filament temperature at the time of drawing is from 130 °C to 180 °C.

When the filament temperature at the time of drawing is 130 °C or higher, which is not lower than a crystal dispersion temperature. Therefore, the drawability tends to be favorable. When the filament temperature at the time of drawing is 180 °C or lower, which is not higher than a melting point of the undrawn yarn. Therefore, a melt breakage does not occur and drawing is stabilized. From these viewpoints, the filament temperature at the time of drawing is more preferably from 130 °C to 160 °C.

In the method for producing the polyolefin fiber of the present invention, it is preferable that the undrawn polyolefin filament is drawn at the total draw ratio of 5.5 to 10.5 times.

When the total draw ratio is 5.5 times or higher, it is possible to obtain a highly oriented polyolefin multifilament, and therefore, to easily obtain a high strength polyolefin multifilament. When the total draw ratio is 10.5 times or lower, occurrence of fuzz and bundle breakage can be reduced, and the polyolefin multifilament can be stably obtained. From these viewpoints, the total draw ratio is preferably from 6.0 to 9.0 times, and more preferably from 7.0 to 8.5 times.

In a case of drawing in two or more stages, the draw ratio in a first stage is preferably from 4.0 to 10.0 times, more preferably from 5.0 to 9.0 times, and further preferably from 7.0 to 8.5 times.

In the method for producing the polyolefin fiber of the present invention, it is preferable that the deformation rate of the filament at the time of drawing is from 1 (1/sec) to 15 (1/sec).

When the deformation rate is 1 (1/sec) or larger, molecular relaxation is less likely to occur during drawing, therefore, highly oriented crystal chains are obtained. Thereby, the fibers having the high tensile strength and the high knot strength are obtained. When the deformation rate is 15 (1/sec) or smaller, the molecular chains are not forcibly elongated, so that a yarn breakage or a bundle breakage is less likely to occur. From these viewpoints, the deformation rate is more preferably from 2.5 (1/sec) to 10 (1/sec).

When the undrawn yarn is drawn in one stage, it is preferable that the deformation rate at the time of drawing is from 8 to 15 (1/sec). Further, when the undrawn yarn is drawn in two or more stages, it is preferable that the deformation rate in the first stage is from 6 to 13 (1/sec) and the deformation rate in the last stage is from 1 to 9 (1/sec).

In the method for producing the polyolefin fiber of the present invention, it is preferable that a take-up speed after drawing is from 100 to 500 m/min.

When the take-up speed is 100 m/min or higher, the productivity becomes favorable. On the other hand, when it is 500 m/min or lower, the obtained undrawn yarn does not become excessively high in crystallinity and orientation, and therefore, the drawability becomes favorable. The take-up speed is more preferably from 200 m/min to 450 m/min, and further more preferably from 300 m/min to 400 m/min.

In the method for producing the polyolefin fiber of the present invention, it is preferable that the MFR of the undrawn polyolefin multifilament is from 8 to 20 g/10 min.

When the MFR is 8 g/10 min or larger, a melt viscosity does not become excessively high, and therefore, the moldability becomes favorable. When the MFR is 20 g/10 min or smaller, a molecular weight of the polypropylene does not become too small, and therefore, the polyolefin multifilament having the high tensile strength and the high knot strength can be easily obtained. From these viewpoints, the MFR is more preferably from 10 to 18 g/10 min.

In the method for producing the polyolefin fiber of the present invention, it is preferable that the polyolefin fiber has a core-sheath structure, in which the MFR of the polyolefin resin in the sheath part is from 10 to 60 g/10 min, the MFR of the polyolefin resin in the core part is smaller than the MFR of the polyolefin resin in the sheath part, and a difference between the MFR of the polyolefin resin in the sheath part and the MFR of the polyolefin resin in the core part is from 4 to 45 g/10 min.

When the MFR of the polyolefin resin in the sheath part is 10 g/10 min or larger, the melt viscosity does not become too high. Therefore, the moldability becomes favorable. When it is 60 g/10 min or smaller, the spinning is stabilized.

From these viewpoints, the MFR of the polyolefin resin in the sheath part is more preferably from 13 to 45 g/10 min, and further more preferably from 15 to 40 g/10 min.

When the MFR of the polyolefin resin in the core part is smaller than the MFR of the polyolefin resin in the sheath part and the difference between the MFR of the polyolefin resin in the core part and the MFR of the polyolefin resin in the sheath part is 4 g/10 min or larger, it is possible to enhance the orientation of the polymer in the core part and thus, to increase the strength of the core-sheath composite fiber. Further, when the difference between the MFR of the polyolefin resin in the core part and the MFR of the polyolefin resin in the sheath part is 45 g/10 min or smaller, it is possible to decrease spinning failure due to the viscosity difference.

From these viewpoints, the difference between the MFR of the core part and the MFR of the sheath part is more preferably from 7 to 40 g/10 min.

In the method for producing the polyolefin fiber of the present invention, it is preferable that the MFR of the core part is from 1 to 20 g/10 min.

When the MFR of the core part is 1 g/10 min or larger, the melt viscosity does not become excessively high. Therefore, the moldability becomes favorable. When the MFR of the core part is 20 g/10 min or lower, the molecular weight of the polypropylene resin does not become too small. Therefore, the polyolefin multifilament having a highly uniformed core part is easily obtained. From these viewpoints, the MFR of the core part is more preferably from 5 to 18 g/10 min, and further more preferably from 8 to 15 g/10 min.

In the method for producing the polyolefin fiber of the present invention, it is preferable that the polyolefin fiber is a polypropylene fiber.

Since the polypropylene fiber has a higher melting point than the polyethylene fiber, it can prevent a melt breakage due to abrasion when used for a rope or a net.

The polyolefin resin used in the present invention may further contain an antioxidant, a light stabilizer, an ultraviolet absorber, a neutralizer, a nucleating agent, an epoxy stabilizer, a lubricant, an antibacterial agent, a flame retardant, an antistat, a pigment, a plasticizer and the like appropriately as required within a range not hindering the effect of the present invention.

<Other Production Conditions in the Method for Producing the Polyolefin Fiber>

<Spinning, Drawing>

In the method for producing the polyolefin fiber of the present invention, a polyolefin raw material is charged into an extruder, melt kneaded, and then quantitatively discharged from discharge holes of a spinning nozzle by a gear pump. The spinning temperature may be set according to the MFR of the polyolefin raw material. The spinning temperature of the polyolefin multifilament of the present invention is preferably from 200 °C to 320 °C. When the spinning temperature is 200 °C or higher, the melt viscosity of the polyolefin raw material does not become high. Therefore, the moldability becomes favorable, and the polyolefin multifilament having a homogeneous crystal structure can be easily obtained. On the other hand, when the spinning temperature is 320 °C or lower, thermal decomposition of the polyolefin raw material itself does not proceed, so that the strength of the obtained polyolefin multifilament is less likely to lower. The spinning temperature is more preferably from 220 °C to 300 °C, and further more preferably from 250 °C to 290 °C.

It is preferable that a mass flow of the polymer discharged from the discharge holes of the spinning nozzle (hereinafter may be referred to as "hole" in some cases) is from 0.1 g/min to 3 g/min per hole. When the mass flow is 0.1 g/min or larger, a yarn fluctuation due to cold air at a quench cylinder is not notable. Therefore, fusing between the filaments or contact with a guide is less likely to occur, and an undrawn yarn can be stably obtained. On the other hand, when the mass flow is 3 g/min or smaller, the resin can be cooled sufficiently. Therefore, the fusing between the filaments is less likely to occur at the time of winding, and the undrawn yarn can be stably obtained. The mass flow is preferably from 1.0 g/min to 2.5 g/min, and more preferably 1.2 g/min to 2.0 g/min.

The fiber extruded from the discharge holes of the spinning nozzle is rapidly cooled by applying cold air at 10 °C to 40 °C at the quench cylinder. The speed of cold air is preferably in a range of 0.5 m/sec to 5 m/sec from the viewpoint that cooling of the fiber proceeds and fusion of fibers due to the yarn fluctuation does not occur. Thereafter, an oil agent is applied to the cooled and solidified fiber with an oiling device as appropriate.

The spinning draft is preferably from 5 times to 150 times. Here, the spinning draft can be calculated by dividing the take-up speed (m/min) of the undrawn yarn by the discharge linear velocity (m/min). The discharge linear velocity is a value obtained by dividing the mass flow per unit time (minute) of the molten resin discharged from the discharge holes of the spinning nozzle by the area of the discharge holes.

When the spinning draft is 5 times or more, tension is applied on the spinning line. Therefore, the yarn fluctuation due to the influence of cold air at the quench cylinder does not become notable. Accordingly, the undrawn yarn can be stably obtained. On the other hand, when the spinning draft is 150 times or less, the tension does not become excessively high on the spinning line, so that the promotion of orientated crystallization is suppressed. Since the obtained undrawn yarn does not become too high in crystallinity and orientation, the drawability becomes favorable.

The take-up speed of the undrawn yarn is preferably from 100 m/min to 1000 m/min. When the take-up speed is 100 m/min or larger, productivity becomes favorable. On the other hand, when it is 1000 m/min or smaller, the obtained undrawn yarn does not become too high in crystallinity and orientation. Therefore, the drawability becomes favorable. The take-up speed is more preferably from 200 m/min to 800 m/min, and further more preferably from 300 m/min to 600 m/min.

Drawing may be carried out in an off-line state to the undrawn yarn once wound or may be continuously carried out from the spinning step without once being wound.

From the viewpoint of production stability, it is preferable that the undrawn yarn is once wound up and then drawn.

Drawing can be carried out by known methods such as a hot plate drawing, a hot roll drawing, and a hot air furnace drawing. From the viewpoint of decreasing the deformation rate, drawing by the hot plate or the hot air furnace is preferable. Here, the deformation rate can be calculated by dividing the value obtained by subtracting the speed of a supply roll from the speed of a take-up roll by the length of the hot plate or the hot air furnace. When the hot roll is used, it is difficult to actually obtain the deformation rate. However, the yarn is drawn just after being removed from the hot roll, therefore, the deformation rate becomes larger as compared with the hot plate or the hot air furnace drawing.

In the method for producing the polyolefin fiber (hereinafter also referred to as "polyolefin multifilament") of the present invention, it is possible to draw the undrawn yarn in 1 to 3 stages.

The fiber may be preheated before the drawing. For preheating before the drawing, a heating roll, a hot plate, a hot air furnace or the like can be used. The temperature of the yarn to be preheated is preferably from 50 °C to 120 °C, and more preferably from 60 °C to 110 °C.

In the method for producing the polyolefin multifilament of the present invention, it is preferable that the take-up speed after the drawing is from 100 m/min to 1500 m/min. When the take-up speed is 100 m/min or higher, productivity becomes favorable. When the take-up speed is 1500 m/min or lower, the deformation rate does not become excessively fast. Therefore, the yarn breakage can be reduced. From these viewpoints, the take-up speed is more preferably from 150 m/min to 1200 m/min, and further more preferably from 200 m/min to 1000 m/min.

The rope and the net of the present invention include the above-mentioned polyolefin multifilament, which makes it possible to reduce the weight as compared with the ones including polyester fibers or nylon fibers.

<Examples>

Hereinafter, the present invention will be illustrated by Reference Examples and Comparative Examples. Note: the Reference Examples are marked further only as "Examples". In these Examples and Comparative Examples, the compressive strength, the single fiber fineness, the tensile strength and elongation, and the knot strength and elongation were measured by the following methods.

<MFR (Melt Mass Flow Rate) of Resin>

Measurement is carried out under the conditions of a temperature of 230 °C, a load of 2.16 kg, and 10 minutes in accordance with JIS K 7201.

<Method for Measuring Compressive Strength>

Regarding the compressive strength, a displacement measurement was conducted using a micro compression tester (MCT-W200 manufactured by Shimadzu Corporation). A single fiber sample was fixed, and pressurized by a flat indenter having an indenter diameter of 0.05 mm up to 1960 mN at the maximum at a rate of 35.3 mN/sec to be compressed in a direction perpendicular to a fiber axis. The fiber diameter for each single fiber was measured with a microscope attached to the apparatus, and a test force when the fiber diameter was displaced by 30 % was substituted into the following formula 1, thereby the compressive strength was obtained. The measurements were conducted for 5 times and the average value was used.

$$St = 2P/(\pi \times L \times d) \ldots (\text{Formula 1})$$

St: Compressive strength (MPa) P: Test force (N)
d: Single fiber diameter (mm) L: Indenter diameter (mm)

<Method for Measuring Single Fiber Fineness and Total Fineness>

Regarding the total fineness, 100 meters of polypropylene resin multifilament was sampled, and its mass was multiplied by 100, and the value was taken as the total fineness. The single fiber fineness was calculated by dividing the total fineness by the number of filaments.

<Weight-Average Molecular Weight>

The weight-average molecular weight was determined by high temperature SEC (HLC-8321GPC/HT manufactured by Tosoh Corporation). The sample was dissolved in ODCB (0.5 g/L BHT added) at 135 °C, filtered through a 1 μm glass filter, and measured using a column (TSK gel GMH6-HT) at 135 °C. The flow rate was 1.0 mL/min, and a monodispersed polystyrene was used as a calibrating sample.

<Method for Measuring Tensile Strength, Tensile Elongation at break and Initial Tensile Elastic Modulus>

The tensile strength, the tensile elongation at break and the initial tensile elastic modulus were measured according to JIS L 1013. A strain-stress curve of the sample was measured by using a tensile tester (AG-IS manufactured by Shimadzu Corporation) under conditions of the sample length of 200 mm, a tensile speed of 100 mm/min, an ambient temperature of 20 °C, and a relative humidity of 65 % to determine the elongation from the value of the breaking point and the strength from the stress at the breaking point. The initial elastic modulus was calculated by the slope of the strain-stress curve. The measurements were conducted for 10 times, and the average value was used.

<Method for Measuring Knot Strength, Knot Elongation at break and Initial Knot Elastic Modulus>

The knot strength, the knot elongation at break and the initial knot elastic modulus were measured according to JIS L 1013. The strain-stress curve was measured by using the tensile tester (AG-IS manufactured by Shimadzu Corporation) under conditions of the sample length of 200 mm, the tensile speed of 100 mm/min, the ambient temperature of 20 °C, and the relative humidity of 65 % to determine the elongation from the value of the breaking point and the strength from the stress at the breaking point. The initial elastic modulus was calculated by the slope of the strain-stress curve.

The measurements were conducted for 5 times with the knot as shown in Fig.3a) and for 5 times with the knot as shown in Fig. 3b) of JIS L 1013, and the average value for the total 10 times was used.

<Method for Measuring Loop Strength, Loop Elongation at break and Initial Loop Elastic Modulus>

The loop strength, the loop elongation at break and the initial loop elastic modulus were measured according to JIS L 1013. The strain-stress curve was measured by using a tensile tester (AG-IS manufactured by Shimadzu Corporation) under conditions of the sample length of 200 mm, the tensile speed of 100 mm/min, the ambient temperature of 20 °C, and the relative humidity of 65 % to determine the elongation from the value of the breaking point and the strength from the stress at the breaking point. The initial elastic modulus was calculated by the slope of the strain-stress curve. The measurements were conducted for 10 times, and the average value was used.

<Example 1>

A polypropylene resin (SA01A manufactured by Japan Polypropylene Corporation, MFR = 10 g/10 min (230 °C, 2.16 kg load, 10 min)) for a core part was charged into a kneader, and a polypropylene resin (SA 03 manufactured by Japan Polypropylene Corporation, MFR = 29 g/10 min (230 °C, 2.16 kg load, 10 min)) for a sheath part was charged into another kneader different from the one for the core part, and the both were heated up to 250 °C to be melt kneaded. A core-sheath composite fiber was discharged at a mass flow of 40 g/min (1.33 g/min per hole) from a core-sheath composite spinning nozzle having 30 discharge holes with 0.6 mmφ diameter each so that the core part accounts for 50 % of the fiber weight. Then it was cooled and solidified by applying cold air at 20 °C, and thereafter oil was applied thereto, and the yarn was wound on a bobbin at a take-up speed of 300 m/min to obtain an undrawn yarn.

The obtained undrawn yarn was preheated using a hot roll to have the yarn temperature of 70 °C, and the hot plate drawing was carried out at a drawing temperature of 155 °C and a draw ratio of 8.5 times at a drawing velocity of 200 m/min to obtain a multifilament of polypropylene resin. The physical properties of the obtained multifilament of polypropylene resin are shown in Table 1.

<Example 2>

A polyolefin multifilament was obtained in the same manner as in Example 1 except for the draw ratio of 9.0 times. The physical properties of the obtained multifilament of polypropylene resin are shown in Table 1.

<Example 3>

A polyolefin multifilament was obtained in the same manner as in Example 1 except for obtaining an undrawn yarn for a sheath part by discharging a polypropylene resin (Y2000 GV manufactured by Prime Polymer Co., Ltd., MFR = 18 g/10 min (230 °C, 2.16 kg load, 10 min)) at a mass flow of 39 g/min (1.30 g/min per hole) from the nozzle, and setting a draw ratio at 8.0 times. The physical properties of the obtained multifilament of polypropylene resin are shown in Table 1.

<Example 4>

A polyolefin multifilament was obtained in the same manner as in Example 3 except for obtaining an undrawn yarn by discharging at a mass flow of 40 g/min (1.33 g/min per hole) from the nozzle and setting a draw ratio at 8.5 times. The physical properties of the obtained multifilament of polypropylene resin are shown in Table 1.

<Example 5>

A polyolefin multifilament was obtained in the same manner as in Example 1 except for using a resin for a sheath part in which a polypropylene resin (SA01A, manufactured by Japan Polypropylene Corporation, MFR = 10 g/10 min (230 °C, 2.16 kg load, 10 min) and a polypropylene resin (SA03 manufactured by Japan Polypropylene Corporation, MFR = 29 g/10 min (230 °C, 2.16 kg load, 10 min) were mixed at a ratio by weight of 1:1 and setting the draw ratio at 7.9 times. The physical properties of the obtained multifilament of polypropylene resin are shown in Table 1.

<Example 6>

A polyolefin multifilament was obtained in the same manner as in Example 1 except for using a resin for a sheath part in which a polypropylene resin (SA01A, manufactured by Japan Polypropylene Corporation, MFR = 10 g/10 min (230 °C, 2.16 kg load, 10 min) and a polypropylene resin (SA03 manufactured by Japan Polypropylene Corporation, MFR = 29 g/10 min (230 °C, 2.16 kg load, 10 min) were mixed at a ratio by weight of 3:1 and discharging at a mass flow of 39 g/min (1.30 g/min per hole) from a nozzle to obtain an undrawn yarn and setting the draw ratio at 7.5 times. The physical properties of the obtained multifilament of polypropylene resin are shown in Table 1.

<Example 7>

A polyolefin multifilament was obtained in the same manner as in Example 1 except for mixing a polypropylene resin (SA01A, manufactured by Japan Polypropylene Corporation, MFR = 10 g/10 min (230 ° C, 2.16 kg load, 10 min) with a polypropylene resin (SA03, MFR = 29 g/10 min (230 °C, 2.16 kg load, 10 min) at a ratio by weight of 3:1, charging it into a kneader, heating it up to 250 °C to be melt kneaded, and discharging it from a spinning nozzle having 30 discharge holes with 0.6 mmφ diameter each at a mass flow of 41 g/min (1.37 g/min per hole) to obtain an undrawn yarn and setting the draw ratio at 7.6 times. The physical properties of the obtained multifilament of polypropylene resin are shown in Table 1.

<Example 8>

An undrawn yarn was obtained by charging a polypropylene resin (SA 01A manufactured by Japan Polypropylene Corporation, MFR = 10 g/10 min (230 °C, 2.16 kg load, 10 min)) into a kneader, heating it up to 280 °C to be melt kneaded, and discharging it from a spinning nozzle having 120 discharge holes with 0.8 mmφ diameter each at a mass flow of 205 g/min (1.71 g/min per hole), and was wound up around a bobbin at a take-up speed of 257 m/min.
A multifilament of the polyolefin resin was obtained in the same manner as in Example 1 except that the undrawn yarn was drawn at a drawing temperature of 165 °C and a draw ratio of 8.4 times. The physical properties of the obtained multifilament of polypropylene resin are shown in Table 1.

<Example 9>

A polyolefin multifilament was obtained in the same manner as in Example 8 except for obtaining an undrawn yarn by discharging from a nozzle at a mass flow of 171 g/min (1.43 g/min per hole) and setting a draw ratio at 7.0 times. The physical properties of the obtained multifilament of polypropylene resin are shown in Table 1.

<Comparative Example 1>

A polyolefin multifilament was obtained in the same manner as in Example 1 except for obtaining an undrawn yarn by charging a polypropylene resin (SA 01A manufactured by Japan Polypropylene Corporation, MFR = 10 g/10 min (230 °C, 2.16 kg load, 10 min)) into a kneader and discharging at a mass flow of 39 g/min (1.30 g/min per hole), and setting a draw ratio at 4.0 times. The physical properties of the obtained multifilament of polypropylene resin are shown in Table 2.

<Comparative Example 2>

A polyolefin multifilament was obtained in the same manner as in Comparative Example 1 except for setting the draw ratio at 5.0 times. The physical properties of the obtained multifilament of polypropylene resin are shown in Table 2.

<Comparative Example 3>

A polyolefin multifilament was obtained in the same manner as in Comparative Example 1 except for setting the draw ratio at 6.0 times. The physical properties of the obtained multifilament of polypropylene resin are shown in Table 2.

<Example 10>

A polyolefin multifilament was obtained in the same manner as in Comparative Example 1 except for setting the draw ratio at 6.8 times. The physical properties of the obtained multifilament of polypropylene resin are shown in Table 2.

<Example 11>

A polyolefin multifilament was obtained in the same manner as in Example 1 except for obtaining an undrawn yarn by charging a polypropylene resin (Y2000 GV manufactured by Prime Polymer Co., MFR = 18 g/10 min (230 °C, 2.16 kg load, 10 min)) into a kneader, heating it up to 280 °C to be melt kneaded, and discharging it from a spinning nozzle at a mass flow of 45 g/min (1.50 g/min per hole), preheating the obtained undrawn yarn by using a hot roll to have a yarn temperature of 70 °C, drawing in the first stage at a drawing temperature of 135 °C and a draw ratio of 6.0 times, and drawing continuously in the second stage at the drawing temperature of 165 °C and the draw ratio of 1.5 times. The physical properties of the obtained multifilament of polypropylene resin are shown in Table 2.

<Example 12>

A polyolefin multifilament was obtained in the same manner as in Example 11 except for setting the drawing temperature in the second stage at 175 °C. The physical properties of the obtained multifilament of polypropylene resin are shown in Table 2.

<Example 13>

A polyolefin multifilament was obtained in the same manner as in Example 11 except for obtaining an undrawn yarn by discharging at a mass flow of 31 g/min (1.29 g/min per hole) from a spinning nozzle having 24 discharge holes, drawing the obtained undrawn yarn in the first stage at a drawing temperature of 145 °C and a draw ratio of 7.7 times, and drawing continuously in the second stage at the draw ratio of 1.3 times. The physical properties of the obtained multifilament of polypropylene resin are shown in Table 2.

| | | Example 1 | Example 2 | Example 3 | Example 4 | Example 5 | Example 6 | Example 7 | Example 8 | Example 9 |
|---|---|---|---|---|---|---|---|---|---|---|
| Fiber structure | | Core-sheath | Core-sheath | Core-sheath | Core-sheath | Core-sheath | Core-sheath | Single | Single | Single |
| MFR of resin in sheath part (MFR(A)) | g/10min | 29 | 29 | 18 | 18 | 18 10 (50 mass%) 29 (50 mass%) | 14 10 (75 mass%) 29 (25 mass%) | 14 10 (75 mass%) 29 (25 mass%) | 10 | 10 |
| MFR of resin in core part (MFR (B)) | g/10min | 10 | 10 | 10 | 10 | 10 | 10 | - | - | - |
| Difference (A-B) | g/10min | 19 | 19 | 8 | 8 | 8 | 4 | - | - | - |
| Melting temperature | °C | 250 | 250 | 250 | 250 | 250 | 250 | 250 | 280 | 280 |
| Diameter of discharge hole | mmΦ | 0.6 | 0.6 | 0.6 | 0.6 | 0.6 | 0.6 | 0.6 | 0.8 | 0.8 |
| Number of hole | | 30 | 30 | 30 | 30 | 30 | 30 | 30 | 120 | 120 |
| Mass flow | g/min | 40 | 40 | 39 | 40 | 40 | 39 | 41 | 205 | 171 |
| Take-up speed of undrawn yarn | m/min | 300 | 300 | 300 | 300 | 300 | 300 | 300 | 257 | 257 |
| Drawing temperature | °C | 155 | 155 | 155 | 155 | 155 | 155 | 155 | 165 | 165 |
| Draw ratio | times | 8.5 | 9.0 | 8.0 | 8.5 | 7.9 | 7.5 | 7.6 | 8.4 | 7.0 |
| Drawing velocity | m/min | 200 | 200 | 200 | 200 | 200 | 200 | 200 | 200 | 200 |
| Deformation rate | 1/second | 9.8 | 9.9 | 9.7 | 9.8 | 9.7 | 9.6 | 9.6 | 9.8 | 9.5 |
| Drawing temperature in second stage | °C | - | - | - | - | - | - | - | - | - |

(continued)

| | | Example 1 | Example 2 | Example 3 | Example 4 | Example 5 | Example 6 | Example 7 | Example 8 | Example 9 |
|---|---|---|---|---|---|---|---|---|---|---|
| Fiber structure | | Core-sheath | Core-sheath | Core-sheath | Core-sheath | Core-sheath | Core-sheath | Single | Single | Single |
| Draw ratio in second stage | times | - | - | - | - | - | - | - | - | - |
| Drawing velocity in second stage | m/min | - | - | - | - | - | - | - | - | - |
| Deformation rate in second stage | 1/sec | - | - | - | - | - | - | - | - | - |
| Area ratio in core part | % | 50 | 50 | 50 | 50 | 50 | 50 | - | - | - |
| Single fiber fineness | dtex | 5.2 | 4.9 | 5.5 | 5.2 | 5.6 | 5.8 | 6.1 | 6.8 | 6.8 |
| Total fineness | dtex | 157 | 147 | 164 | 155 | 167 | 175 | 182 | 815 | 815 |
| Compressive strength | MPa | 47 | 48 | 50 | 50 | 48 | 51 | 51 | 50 | 49 |
| Knot strength | cN/dtex | 5.7 | 6.0 | 5.7 | 5.6 | 5.7 | 5.4 | 5.5 | 4.9 | 4.8 |
| Tensile strength | cN/dtex | 7.6 | 8.1 | 7.6 | 7.7 | 7.3 | 6.7 | 7.7 | 7.2 | 6.5 |
| Tensile elongation at break | % | 18.7 | 19.6 | 19.1 | 18.3 | 21.3 | 18.6 | 20.9 | 18.0 | 23.3 |
| Knot elongation at break | % | 10.34 | 10.2 | 10.9 | 10.3 | 11.6 | 11.0 | 10.9 | 10.8 | 13.1 |

| | | Comparative Example 1 | Comparative Example 2 | Comparative Example 3 | Example 10 | Example 11 | Example 12 | Example 13 |
|---|---|---|---|---|---|---|---|---|
| Fiber structure | | Single | Single | Single | Single | Single | Single | Single |
| MFR of resin in sheath part (MFR(A)) | g/10min | 10 | 10 | 10 | 10 | 18 | 18 | 18 |
| MFR of resin in core part (MFR(B)) | g/10min | - | - | - | - | - | - | - |
| Difference (A-B) | g/10min | - | - | - | - | - | - | - |
| Melting temperature | °C | 250 | 250 | 250 | 250 | 280 | 280 | 280 |
| Diameter of discharge hole | mmΦ | 0.6 | 0.6 | 0.6 | 0.6 | 0.6 | 0.6 | 0.6 |
| Number of hole | | 30 | 30 | 30 | 30 | 30 | 30 | 24 |
| Mass flow | g/min | 39 | 39 | 39 | 39 | 45 | 45 | 31 |
| Take-up speed of undrawn yarn | m/min | 300 | 300 | 300 | 300 | 300 | 300 | 300 |
| Drawing temperature | °C | 155 | 155 | 155 | 155 | 135 | 135 | 145 |
| Draw ratio | times | 4.0 | 5.0 | 6.0 | 6.8 | 6.0 | 6.0 | 7.7 |
| Drawing velocity | m/min | 200 | 200 | 200 | 200 | - | - | - |
| Deformation rate | 1/sec | 8.3 | 8.9 | 9.3 | 9.5 | 6.2 | 6.3 | 7.4 |
| Drawing temperature in second stage | °C | - | - | - | - | 165 | 175 | 165 |
| Draw ratio in second stage | times | - | - | - | - | 1.5 | 1.5 | 1.3 |
| Drawing velocity in second stage | m/min | - | - | - | - | 200 | 200 | 200 |
| Deformation rate in second stage | 1/sec | - | - | - | - | 3.7 | 3.7 | 2.6 |
| Area ratio in core part | % | - | - | - | - | - | - | - |
| Single fiber fineness | dtex | 10.7 | 8.6 | 7.2 | 6.4 | 5.6 | 5.6 | 4.3 |
| Total fineness | dtex | 322 | 259 | 216 | 192 | 167 | 167 | 103 |

EP 3 492 635 B1

14

(continued)

| | | Comparative Example 1 | Comparative Example 2 | Comparative Example 3 | Example 10 | Example 11 | Example 12 | Example 13 |
|---|---|---|---|---|---|---|---|---|
| Fiber structure | | Single | Single | Single | Single | Single | Single | Single |
| Compressive strength | MPa | 54 | 52 | 54 | 51 | 49 | 51 | 35 |
| Knot strength | cN/dtex | 3.5 | 4.5 | 4.8 | 5.1 | 5.1 | 5.1 | 5.1 |
| Tensile strength | cN/dtex | 3.8 | 5.2 | 6.7 | 8.1 | 7.7 | 7.0 | 8.4 |
| Tensile elongation at break | % | 44.9 | 31.7 | 26.1 | 25.8 | 14.7 | 14.5 | 12.7 |
| Knot elongation at break | % | 27.6 | 18.5 | 13.6 | 11.8 | 7.6 | 8.9 | 5.7 |

<Example 14>

A polypropylene resin (SA 01A manufactured by Japan Polypropylene Corporation, MFR = 10 g/10 min (230 °C, 2.16 kg load, 10 min)) was charged into an extruder of a melt spinning apparatus, heated up to 250 °C to be melt kneaded, and discharged from a spinning nozzle having 30 discharge holes with 0.6 mm$\varphi$ diameter each at a mass flow of 39.6 g/min (1.32 g/min per hole). After being cooled and solidified by applying cold air at 20 °C, an oil was applied, and the undrawn yarn was obtained by winding on a bobbin at a take-up speed of 300 m/min.
The obtained undrawn yarn was preheated using a hot roll to have the yarn temperature of 70 °C, and a hot plate drawing was conducted at a drawing temperature of 155 °C, a draw ratio of 7.0 times, and a drawing velocity of 200 m/min, thereby a polypropylene multifilament was obtained.
The production conditions of the polypropylene multifilament are shown in Table 3, and the physical properties of the obtained polypropylene multifilament are shown in Table 4.

<Example 15>

The same polypropylene resin as in Example 14 was charged into an extruder of a melt spinning apparatus, heated up to 280 °C to be melt kneaded, and discharged from a spinning nozzle having 120 discharge holes with 0.8 mm$\varphi$ diameter each at a mass flow of 168 g/min (1.4 g/min per hole). After being cooled and solidified by applying cold air at 20 °C, an oil was applied, and the undrawn yarn was obtained by winding on a bobbin at a take-up speed of 257 m/min.
The obtained undrawn yarn was preheated using a hot roll to have the yarn temperature of 70 °C, and a hot plate drawing was conducted at a drawing temperature of 170 °C, a draw ratio of 8.4 times, and a drawing velocity of 200 m/min, thereby a polypropylene multifilament was obtained.
The production conditions of the polypropylene multifilament are shown in Table 3, and the physical properties of the obtained polypropylene multifilament are shown in Table 4.

<Example 16>

An undrawn yarn was obtained in the same manner as in Example 15 except for setting the mass flow at 143 g/min (1.2 g/min per hole).
The obtained undrawn yarn was drawn in the same manner as in Example 15 except for changing the draw ratio and the drawing temperature as shown in Table 3 to obtain a polypropylene multifilament.
The production conditions of the polypropylene multifilament are shown in Table 3, and the physical properties of the obtained polypropylene multifilament are shown in Table 4.

<Example 17>

The two polypropylene multifilaments obtained in Example 15 were paralleled to measure various physical properties. The physical properties are shown in Table 4.

<Example 18>

The two polypropylene multifilaments obtained in Example 16 were paralleled to measure various physical properties. The physical properties are shown in Table 4.

<Example 19>

A polypropylene resin (Y2000 GV manufactured by Prime Polymer Co., MFR = 18 g/10 min (230 °C, 2.16 kg load, 10 min)) was charged into an extruder of a melt spinning apparatus, heated up to 280 °C to be melt kneaded, and discharged from a spinning nozzle having 36 discharge holes with 0.5 mm$\varphi$ diameter each at a mass flow of 45.3 g/min (1.26 g/min per hole). After being cooled and solidified by applying cold air at 20 °C, an oil was applied, and the undrawn yarn was obtained by winding on a bobbin at a take-up speed of 300 m/min.
The obtained undrawn yarn was preheated using a hot roll to have the yarn temperature of 85 °C, and a hot plate drawing was conducted at a drawing temperature of 155 °C, a draw ratio of 8.0 times, and a drawing velocity of 300 m/min, thereby a polypropylene multifilament was obtained.
The production conditions of the polypropylene multifilament are shown in Table 3, and the physical properties of the obtained polypropylene multifilament are shown in Table 4.

<Example 20>

A polypropylene multifilament was obtained in the same manner as in Example 19 except for changing the draw ratio as shown in Table 3.

The production conditions of the polypropylene multifilament are shown in Table 3, and the physical properties of the obtained polypropylene multifilament are shown in Table 4.

<Example 21>

A polypropylene resin (SA 01A manufactured by Japan Polypropylene Corporation, MFR = 10 g/10 min (230 °C, 2.16 kg load, 10 min)) was charged into an extruder of a melt spinning apparatus, heated up to 270 °C to be melt kneaded, and discharged from a spinning nozzle having 30 discharge holes with 0.6 mm$\varphi$ diameter each at a mass flow of 47.8 g/min (1.59 g/min per hole). After being cooled and solidified by applying cold air at 20 °C, an oil was applied, and the undrawn yarn was obtained by winding on a bobbin at a take-up speed of 300 m/min.

The undrawn yarn was preheated using a hot roll to have the yarn temperature of 70 °C, a hot plate drawing was conducted in the first stage at a drawing temperature of 155 °C and a draw ratio of 8.0 times. Then the yarn was continuously preheated using a hot roll to have the yarn temperature of 120 °C, and a hot plate drawing was conducted in the second stage at a drawing temperature of 165 °C, a draw ratio of 1.1 times, and a drawing velocity of 200 m/min, thereby a polypropylene multifilament was obtained.

The production conditions of the polypropylene multifilament are shown in Table 3, and the physical properties of the obtained polypropylene multifilament are shown in Table 4.

<Example 22>

The same polypropylene resin as in Example 21 was charged into an extruder of a melt spinning apparatus, heated up to 290 °C to be melt kneaded, and discharged from a spinning nozzle having 30 discharge holes with 0.6 mm$\varphi$ diameter each at a mass flow of 59.5 g/min (1.98 g/min per hole). After being cooled and solidified by applying cold air at 20 °C, an oil was applied, and the undrawn yarn was obtained by winding on a bobbin at a take-up speed of 400 m/min.

A polypropylene multifilament was obtained in the same manner as in Example 21 except for changing the draw ratio in the first stage as shown in Table 3.

The production conditions of the polypropylene multifilament are shown in Table 3, and the physical properties of the obtained polypropylene multifilament are shown in Table 4.

<Example 23>

A polypropylene resin (Y2000 GV manufactured by Prime Polymer Co., MFR = 18 g/10 min (230 °C, 2.16 kg load, 10 min)) was charged into an extruder of a melt spinning apparatus, heated up to 280 °C to be melt kneaded, and discharged from a spinning nozzle having 36 discharge holes with 0.5 mm$\varphi$ diameter each at a mass flow of 45.3 g/min (1.26 g/min per hole). After being cooled and solidified by applying cold air at 20 °C, an oil was applied, and the undrawn yarn was obtained by winding on a bobbin at a take-up speed of 300 m/min.

The obtained undrawn yarn was preheated using a hot roll to have the yarn temperature of 85 °C, a hot plate drawing was conducted in the first stage at a drawing temperature of 135 °C and a draw ratio of 6.0 times, continuously the undrawn yarn was preheated using a hot roll to have the yarn temperature of 120 °C, a hot plate drawing was conducted in the second stage at a drawing temperature of 175 °C, a draw ratio of 1.2 times, and a drawing velocity of 300 m/min, thereby a polypropylene multifilament was obtained.

The production conditions of the polypropylene multifilament are shown in Table 3, and the physical properties of the obtained polypropylene multifilament are shown in Table 4.

<Example 24>

A polypropylene multifilament was obtained in the same manner as in Example 23 except for changing the draw ratio in the second stage as shown in Table 3.

The production conditions of the polypropylene multifilament are shown in Table 3, and the physical properties of the obtained polypropylene multifilament are shown in Table 4.

<Example 25>

A polypropylene multifilament was obtained in the same manner as in Example 23 except for changing the drawing temperature and the draw ratio in the first stage and the drawing temperature and the draw ratio in the second stage as shown in Table 3.
The production conditions of the polypropylene multifilament are shown in Table 3, and the physical properties of the obtained polypropylene multifilament are shown in Table 4.

<Example 26>

A polypropylene multifilament was obtained in the same manner as in Example 23 except for changing the drawing temperature and the draw ratio in the second stage as shown in Table 3.
The production conditions of the polypropylene multifilament are shown in Table 3, and the physical properties of the obtained polypropylene multifilament are shown in Table 4.

<Example 27>

A polypropylene multifilament was obtained in the same manner as in Example 23 except for changing the drawing temperature and the draw ratio in the first stage and the drawing temperature in the second stage as shown in Table 3.
The production conditions of the polypropylene multifilament are shown in Table 3, and the physical properties of the obtained polypropylene multifilament are shown in Table 4.

<Example 28>

A polypropylene multifilament was obtained in the same manner as in Example 23 except for changing the drawing temperature and the draw ratio in the first stage and the drawing temperature in the second stage as shown in Table 3.
The production conditions of the polypropylene multifilament are shown in Table 3, and the physical properties of the obtained polypropylene multifilament are shown in Table 4.

<Comparative Example 4>

A polypropylene multifilament was obtained in the same manner as in Example 14 except for changing the draw ratio as shown in Table 3.
The production conditions of the polypropylene multifilament are shown in Table 3, and the physical properties of the obtained polypropylene multifilament are shown in Table 4.

<Comparative Example 5>

A polypropylene multifilament was obtained in the same manner as in Example 14 except for changing the draw ratio as shown in Table 3.
The production conditions of the polypropylene multifilament are shown in Table 3, and the physical properties of the obtained polypropylene multifilament are shown in Table 4.

<Comparative Example 6>

A polypropylene resin (SA 01A manufactured by Japan Polypropylene Corporation, MFR = 10 g/10 min (230 °C, 2.16 kg load, 10 min)) was charged into an extruder of a melt spinning apparatus, heated up to 250 °C to be melt kneaded, and discharged from a spinning nozzle having 30 discharge holes with 0.6 mm$\varphi$ diameter each at a mass flow of 61.5 g/min (2.05 g/min per hole). After being cooled and solidified by applying cold air at 20 °C, an oil was applied, and the undrawn yarn was obtained by winding on a bobbin at a take-up speed of 300 m/min.
The obtained undrawn yarn was preheated using a hot roll to have the yarn temperature of 70 °C, and a hot plate drawing was conducted under conditions as shown in Table 3, thereby a polypropylene multifilament was obtained.
The production conditions of the polypropylene multifilament are shown in Table 3, and the physical properties of the obtained polypropylene multifilament are shown in Table 4.

<Comparative Example 7>

A polypropylene multifilament was obtained in the same manner as in Example 20 except for changing the draw ratio as shown in Table 3.

The production conditions of the polypropylene multifilament are shown in Table 3, and the physical properties of the obtained polypropylene multifilament are shown in Table 4.

<Comparative Example 8>

A polypropylene multifilament was obtained in the same manner as in Example 21 except for changing the draw ratio in the first stage as shown in Table 3.

The production conditions of the polypropylene multifilament are shown in Table 3, and the physical properties of the obtained polypropylene multifilament are shown in Table 4.

<Comparative Example 9>

A polypropylene resin (Y2000 GV manufactured by Prime Polymer Co., MFR = 18 g/10 min (230 °C, 2.16 kg load, 10 min)) was charged into an extruder of a melt spinning apparatus, heated up to 220 °C to be melt kneaded, and discharged from a spinning nozzle having 80 discharge holes with 1.0 mm$\varphi$ diameter each at a mass flow of 169.3 g/min (2.12 g/min per hole). After being cooled and solidified by applying cold air at 20 °C, an oil was applied, and the yarn was wound at a take-up speed of 157 m/min. Subsequently, a roll drawing was conducted at a drawing temperature of 135 °C and a draw ratio of 5.5 times, further the roll drawing was conducted in the second stage at a drawing temperature of 145 °C and a draw ratio of 1.2 times, and the yarn was wound at a drawing velocity of 1040 m/min, thereby a polypropylene multifilament was obtained.

The production conditions of the polypropylene multifilament are shown in Table 3, and the physical properties of the obtained polypropylene multifilament are shown in Table 4.

[Table 3]

| | Material | First stage | | | Second stage | | | Final | | |
|---|---|---|---|---|---|---|---|---|---|---|
| | Polymer MFR | Drawing temperature | Draw ratio | Deformation rate | Drawing temperature | Draw ratio | Deformation rate | Draw ratio | Drawing velocity | |
| | g/10min | °C | times | 1/s | °C | times | 1/s | times | m/min | |
| Example 14 | 10 | 155 | 7.0 | 9.52 | - | - | - | 7.0 | 200 | 2 step |
| Example 15 | 10 | 170 | 8.4 | 9.79 | - | - | - | 8.4 | 200 | 2 step |
| Example 16 | 10 | 165 | 7.0 | 9.52 | - | - | - | 7.0 | 200 | 2 step |
| Example 17 | 10 | 170 | 8.4 | 9.79 | - | - | - | 8.4 | 200 | 2 step |
| Example 18 | 10 | 165 | 7.0 | 9.52 | - | - | - | 7.0 | 200 | 2 step |
| Example 19 | 18 | 155 | 8.0 | 14.58 | - | - | - | 8.0 | 300 | 2 step |
| Example 20 | 18 | 155 | 6.0 | 13.89 | - | - | - | 6.0 | 300 | 2 step |
| Example 21 | 10 | 155 | 8.0 | 8.84 | 165 | 1.1 | 1.01 | 8.8 | 200 | 2 step |
| Example 22 | 10 | 155 | 9.0 | 8.98 | 165 | 1.1 | 1.01 | 9.9 | 200 | 2 step |
| Example 23 | 18 | 135 | 6.0 | 11.57 | 175 | 1.2 | 2.78 | 7.2 | 300 | 2 step |
| Example 24 | 18 | 135 | 6.0 | 9.26 | 175 | 1.5 | 5.56 | 9.0 | 300 | 2 step |
| Example 25 | 18 | 145 | 7.7 | 11.16 | 165 | 1.3 | 3.85 | 10.0 | 300 | 2 step |
| Example 26 | 18 | 135 | 6.0 | 9.26 | 165 | 1.5 | 5.56 | 9.0 | 300 | 2 step |

(continued)

| | Material | First stage | | | Second stage | | | Final | | |
|---|---|---|---|---|---|---|---|---|---|---|
| | Polymer MFR | Drawing temperature | Draw ratio | Deformation rate | Drawing temperature | Draw ratio | Deformation rate | Draw ratio | Drawing velocity | |
| | g/10min | °C | times | 1/s | °C | times | 1/s | times | m/min | |
| Example 27 | 18 | 145 | 8.4 | 12.24 | 165 | 1.2 | 2.78 | 10.0 | 300 | 2 step |
| Example 28 | 18 | 145 | 4.0 | 6.25 | 175 | 2.0 | 8.33 | 8.0 | 300 | 2 step |
| Comparative Example 4 | 10 | 155 | 6.0 | 9.26 | - | - | - | 6.0 | 200 | 2 step |
| Comparative Example 5 | 10 | 155 | 5.0 | 8.89 | - | - | - | 5.0 | 200 | 2 step |
| Comparative Example 6 | 10 | 155 | 4.0 | 8.33 | - | - | - | 4.0 | 200 | 2 step |
| Comparative Example 7 | 18 | 155 | 5.0 | 13.33 | - | - | - | 5.0 | 300 | 2 step |
| Comparative Example 8 | 10 | 155 | 10.4 | 9.13 | 165 | 1.1 | 1.01 | 11.4 | 200 | 2 step |
| Comparative Example 9 | 18 | 135 | 5.5 | 39.39 | 145 | 1.2 | 9.63 | 6.6 | 1040 | 1 step |

EP 3 492 635 B1

| | Single fiber fineness | Total fineness | Weight-average molecular weight | Tensile | | | Knot | | | | Loop | | | |
|---|---|---|---|---|---|---|---|---|---|---|---|---|---|---|
| | | | | Strength | Elongation at break | Initial elastic modulus | Strength | Elongation at break | Initial elastic modulus | Knot/ Tensile | Strength | Elongation at break | Initial elastic modulus | Loop/ Tensile |
| | dtex | dtex | | cN/dtex | % | cN/dtex | cN/dtex | % | cN/dtex | % | cN/dtex | % | cN/dtex | % |
| Example 14 | 6.2 | 186 | 236000.0 | 7.73 | 21.3 | 100.5 | 5.37 | 10.8 | 83.3 | 69.5 | 5.72 | 12.1 | 106.1 | 74.0 |
| Example 15 | 6.8 | 815 | 236000.0 | 7.16 | 18.0 | 105.5 | 4.95 | 10.8 | 83.5 | 69.1 | 6.31 | 15.0 | 101.9 | 88.1 |
| Example 16 | 6.8 | 815 | 236000.0 | 6.47 | 23.3 | 85.4 | 4.83 | 13.1 | 70.1 | 74.7 | 6.34 | 21.5 | 83.7 | 98.0 |
| Example 17 | 6.8 | 1630 | 236000.0 | 7.09 | 18.9 | 141.2 | 4.63 | 9.7 | 92.9 | 65.3 | 6.37 | 17.6 | 111.1 | 89.8 |
| Example 18 | 6.8 | 1630 | 236000.0 | 6.33 | 23.0 | 86.3 | 4.36 | 12.0 | 72.4 | 68.9 | 5.96 | 22.3 | 99.7 | 94.1 |
| Example 19 | 6.4 | 192 | 196000.0 | 7.02 | 20.0 | 101.1 | 5.16 | 10.6 | 91.1 | 73.5 | 5.88 | 13.4 | 96.2 | 83.7 |
| Example 20 | 8.4 | 251 | 196000.0 | 5.36 | 24.3 | 74.5 | 4.61 | 16.3 | 62.3 | 86.0 | 5.29 | 21.5 | 71.2 | 98.7 |
| Example 21 | 6.2 | 186 | 236000.0 | 8.93 | 16.2 | - | 5.26 | 7 | - | - | - | - | - | - |
| Example 22 | 4.8 | 145 | 236000.0 | 9.26 | 14.1 | - | 5.25 | 5.7 | - | - | - | - | - | - |
| Example 23 | 6.9 | 207 | 196000.0 | 6.03 | 20.1 | 81.6 | 5.16 | 14.0 | 72.9 | 85.5 | 5.42 | 16.6 | 77.2 | 90.0 |
| Example 24 | 5.6 | 167 | 196000.0 | 7.00 | 14.5 | 120.9 | 5.08 | 8.9 | 102.9 | 72.6 | 5.39 | 9.5 | 109.6 | 77.1 |
| Example 25 | 3.4 | 103 | 196000.0 | 8.35 | 12.7 | 160.8 | 5.08 | 5.7 | 139.1 | 60.8 | 5.20 | 5.6 | 146.7 | 62.2 |
| Example 26 | 5.6 | 167 | 196000.0 | 7.70 | 14.7 | 128.9 | 5.05 | 7.6 | 110.1 | 65.6 | 5.97 | 9.6 | 116.8 | 77.5 |
| Example 27 | 3.0 | 89 | 196000.0 | 8.17 | 12.4 | 149.8 | 4.57 | 5.6 | 130.3 | 56.0 | 4.97 | 6.1 | 134.4 | 60.8 |
| Example 28 | 6.2 | 185 | 196000.0 | 5.22 | 13.1 | 89.8 | 4.50 | 10.2 | 79.4 | 86.2 | 4.86 | 11.5 | 81.7 | 93.2 |
| Compartive Example 4 | 7.2 | 216 | 236000.0 | 6.69 | 26.1 | 76.1 | 4.85 | 13.6 | 77.2 | 72.5 | 5.15 | 15.3 | 73.6 | 77.0 |
| Compartive Example 5 | 8.6 | 259 | 236000.0 | 5.23 | 31.7 | 53.8 | 4.47 | 18.5 | 48.8 | 85.4 | 4.97 | 22.8 | 55.6 | 94.9 |
| Compartive Example 6 | 10.7 | 322 | 236000.0 | 3.80 | 44.9 | 37.9 | 3.54 | 27.6 | 33.1 | 93.2 | 3.53 | 27.8 | 33.7 | 92.9 |
| Compartive Example 7 | 12.2 | 366 | 196000.0 | 2.81 | 74.6 | 46.2 | 2.70 | 35.5 | 38.9 | 95.9 | 2.65 | 29.5 | 39.2 | 94.3 |

(continued)

| | Single fiber fine-ness | Total fineness | Weight-average molecular weight | Tensile | | | Knot | | | | Loop | | | |
|---|---|---|---|---|---|---|---|---|---|---|---|---|---|---|
| | | | | Strength | Elongation at break | Initial elastic modulus | Strength | Elongation at break | Initial elastic modulus | Knot/ Tensile | Strength | Elongation at break | Initial elastic modulus | Loop/ Tensile |
| | dtex | dtex | | cN/dtex | % | cN/dtex | cN/dtex | % | cN/dtex | % | cN/dtex | % | cN/dtex | % |
| Compartive Example 8 | 6.0 | 180 | 236000.0 | 8.64 | 11.9 | - | 3.44 | 4.1 | - | - | - | - | - | - |
| Compartive Example 9 | 21.0 | 1678 | 196000.0 | 4.86 | 20.7 | 68.2 | 3.97 | 14.8 | 51.3 | 81.7 | 4.11 | 15.8 | 71.4 | 84.6 |

**Claims**

1. A polyolefin fiber in a form of a multifilament consisting of a plurality of single fibers, wherein each of the fibers is made of a polyolefin having a weight-average molecular weight of 180,000 to 300,000, and has a compressive strength of 30 to 51 MPa calculated by the following formula 1 when compressed and deformed by 30 % with respect to a fiber diameter in a direction perpendicular to the fiber axis in each single fiber,

$$St=2P/(\pi \times L \times d)\ldots(\text{Formula 1})$$

   St: Compressive strength (MPa), P: Testing force (N)
   d: Single fiber diameter (mm), L: Diameter of indenter (mm); and
   wherein the compressive strength was measured in accordance with the section "Method for Measuring Compressive Strength" of the specification; wherein the weight-average molecular weight was measured in accordance with the section "weight-average molecular weight" of the specification.

2. The polyolefin fiber in a form of the multifilament consisting of the plurality of single fibers according to claim 1, wherein a knot strength is 4 cN/dtex or higher, and
   a tensile elongation at break is from 10 to 26 %;
   wherein the tensile elongation at break was measured in accordance with the section "Method for Measuring Tensile Strength, Tensile Elongation at break and Initial Tensile Elastic Modulus" of the specification; and
   wherein the knot strength was measured in accordance with the section "Method for Measuring Knot Strength, Knot Elongation at break and Initial Knot Elastic Modulus" of the specification.

3. The polyolefin fiber in a form of the multifilament consisting of the plurality of single fibers according to claim 1 or claim 2, wherein
   each single fiber is a core-sheath composite fiber formed of a core part and a sheath part,
   a melt mass flow rate of the polyolefin resin in the sheath part is from 10 to 60 g/ 10 min,
   a melt mass flow rate of the polyolefin resin in the core part is smaller than the melt mass flow rate of the polyolefin resin in the sheath part, and
   a difference between the melt mass flow rate of the polyolefin resin in the core part and the melt mass flow rate of the polyolefin resin in the sheath part is from 4 to 45 g/ 10 min;
   wherein the melt mass flow rate was measured in accordance with the section "MFR (melt mass flow rate) of resin" of the specification.

4. The polyolefin fiber according to any one of claims 1 to 3, wherein a loop strength is from 4 to 8 cN/dtex;
   wherein the loop strength was measured in accordance with the section "Method for Measuring Loop Strength, Loop Elongation at break and Initial Loop Elastic Modulus" of the specification.

5. The polyolefin fiber according to any one of claims 1 to 4, wherein
   a single fiber fineness is from 3 to 25 dtex, and
   a total fineness is from 50 to 2000 dtex.

6. The polyolefin fiber according to any one of claims 1 to 5, wherein
   a tensile strength is 6 cN/dtex or higher,
   an initial tensile elastic modulus is 70 cN/dtex or higher, and
   a knot elongation at break is from 5 to 20 %;
   wherein the tensile strength and initial tensile elastic modulus were measured in accordance with the section "Method for Measuring Tensile Strength, Tensile Elongation at break and Initial Tensile Elastic Modulus" of the specification; and
   wherein the knot elongation at break was measured in accordance with the section "Method for Measuring Knot Strength, Knot Elongation at break and Initial Knot Elastic Modulus" of the specification.

7. The polyolefin fiber according to any one of claims 3 to 6, wherein
   an area ratio in the core part in a cross section perpendicular to the fiber axis of the core-sheath composite fiber is from 50 to 90 %.

8. A rope containing 80 mass % or more of the polyolefin fiber according to any one of claims 1 to 7.

9. A net containing 80 mass % or more of the polyolefin fiber according to any one of claims 1 to 7.

**Patentansprüche**

1. Polyolefinfaser in einer Form eines Multifilaments, das aus mehreren Einzelfasern besteht, wobei jede der Fasern aus einem Polyolefin mit einem gewichtsmittleren Molekulargewicht von 180.000 bis 300.000 und einer Druckfestigkeit von 30 bis 51 MPa, berechnet durch die folgende Formel 1, wenn sie um 30% komprimiert und verformt wird in Bezug auf einen Faserdurchmesser in einer Richtung senkrecht zu der Faserachse in jeder Einzelfaser, hergestellt ist,

$$St=2P/(\pi \times L \times d)...(Formel\ 1)$$

St: Druckfestigkeit (MPa), P: Testkraft (N)
d: Einzelfaserdurchmesser (mm), L: Durchmesser des Eindringkörpers (mm); und
wobei die Druckfestigkeit gemäß dem Abschnitt "Verfahren zur Messung der Druckfestigkeit" der Beschreibung gemessen wurde; wobei das gewichtsmittlere Molekulargewicht gemäß dem Abschnitt "gewichtsmittleres Molekulargewicht" der Beschreibung gemessen wurde.

2. Polyolefinfaser in einer Form des Multifilaments, das aus mehreren Einzelfasern besteht gemäß Anspruch 1, wobei eine Knotenfestigkeit 4 cN/dtex oder mehr beträgt, und eine Zugdehnung beim Bruch 10 bis 26% beträgt; wobei die Zugdehnung beim Bruch gemäß dem Abschnitt "Verfahren zur Messung der Zugfestigkeit, der Zugdehnung beim Bruch und dem anfänglichen Zugelastizitätsmodul" der Beschreibung gemessen wurde; und wobei die Knotenfestigkeit gemäß dem Abschnitt "Verfahren zur Messung der Knotenfestigkeit, der Knotendehnung beim Bruch und dem anfänglichen Knotenelastizitätsmodul" der Beschreibung gemessen wurde.

3. Polyolefinfaser in einer Form des Multifilaments, das aus mehreren Einzelfasern besteht gemäß Anspruch 1 oder Anspruch 2, wobei jede Einzelfaser eine Kern-Mantel-Verbundfaser ist, die aus einem Kernteil und einem Mantelteil gebildet ist, eine Schmelzflussrate des Polyolefinharzes in dem Mantelteil 10 bis 60 g/10 Min beträgt, eine Schmelzflussrate des Polyolefinharzes in dem Kernteil kleiner ist als die Schmelzflussrate des Polyolefinharzes in dem Mantelteil, und ein Unterschied zwischen der Schmelzflussrate des Polyolefinharzes in dem Kernteil und der Schmelzflussrate des Polyolefinharzes in dem Mantelteil 4 bis 45 g/10 Min beträgt; wobei die Schmelzflussrate gemäß dem Abschnitt "MFR (Schmelzflussrate) des Harzes" der Beschreibung gemessen wurde.

4. Polyolefinfaser gemäß mindestens einem der Ansprüche 1 bis 3, wobei eine Schlingenfestigkeit 4 bis 8 cN/dtex beträgt; wobei die Schlingenfestigkeit gemäß dem Abschnitt "Verfahren zur Messung der Schlingenfestigkeit, der Schlingendehnung beim Bruch und dem anfänglichen Schlingenelastizitätsmodul" der Beschreibung gemessen wurde.

5. Polyolefinfaser gemäß mindestens einem der Ansprüche 1 bis 4, wobei eine Einzelfaserfeinheit 3 bis 25 dtex beträgt, und eine Gesamtfeinheit 50 bis 2000 dtex beträgt.

6. Polyolefinfaser gemäß mindestens einem der Ansprüche 1 bis 5, wobei eine Zugfestigkeit 6 cN/dtex oder mehr beträgt, ein anfängliches Zugelastizitätsmodul 70 cN/dtex oder mehr beträgt, und eine Knotendehnung beim Bruch 5 bis 20% beträgt; wobei die Zugfestigkeit und das anfängliche Zugelastizitätsmodul gemäß dem Abschnitt "Verfahren zur Messung der Zugfestigkeit, der Zugdehnung beim Bruch und dem anfänglichen Zugelastizitätsmodul" der Beschreibung gemessen wurden; und

wobei die Knotendehnung beim Bruch gemäß dem Abschnitt "Verfahren zur Messung der Knotenfestigkeit, der Knotendehnung beim Bruch und dem anfänglichen Knotenelastizitätsmodul" der Beschreibung gemessen wurde.

**7.** Polyolefinfaser gemäß mindestens einem der Ansprüche 3 bis 6, wobei ein Flächenverhältnis in dem Kernteil in einem Querschnitt senkrecht zu der Faserachse der Kern-Mantel-Verbundfaser 50 bis 90% beträgt.

**8.** Seil, das 80 Massen-% oder mehr der Polyolefinfaser gemäß mindestens einem der Ansprüche 1 bis 7 enthält.

**9.** Netz, das 80 Massen-% oder mehr der Polyolefinfaser gemäß mindestens einem der Ansprüche 1 bis 7 enthält.

**Revendications**

**1.** Fibre de polyoléfine sous la forme d'un multifilament consistant en une pluralité de fibres uniques, dans laquelle chacune des fibres est réalisée à partir d'une polyoléfine ayant un poids moléculaire moyen en poids de 180 000 à 300 000, et a une résistance à la compression de 30 à 51 MPa calculée par la formule 1 suivante lorsqu'elle est comprimée et déformée de 30 % par rapport à un diamètre de fibre dans une direction perpendiculaire à l'axe de fibre dans chaque fibre unique,

$$St = 2P/(\pi \times L \times d) \ldots \text{(Formule 1)}$$

St : résistance à la compression (MPa), P : force d'essai (N)
d : diamètre de fibre unique (mm), L : diamètre de dispositif d'indentation (mm) ; et
dans laquelle la résistance à la compression a été mesurée conformément à la section « Procédé de mesure de la résistance à la compression » de la description ; dans laquelle le poids moléculaire moyen en poids a été mesuré conformément à la section « poids moléculaire moyen en poids » de la description.

**2.** Fibre de polyoléfine sous la forme du multifilament consistant en la pluralité de fibres uniques selon la revendication 1, dans laquelle
une résistance de nœud est de 4 cN/dtex ou plus, et
un allongement à la traction à la rupture est de 10 à 26 % ;
dans laquelle l'allongement à la traction à la rupture a été mesuré conformément à la section « Procédé de mesure de résistance à la traction, d'allongement à la traction à la rupture et de module élastique à la traction initial » de la description ; et
dans laquelle la résistance de nœud a été mesurée conformément à la section « Procédé de mesure de résistance de nœud, d'allongement de nœud à la rupture et de module élastique de nœud initial » de la description.

**3.** Fibre de polyoléfine sous la forme du multifilament consistant en la pluralité de fibres uniques selon la revendication 1 ou la revendication 2, dans laquelle
chaque fibre unique est une fibre composite âme-gaine formée d'une partie d'âme et d'une partie de gaine,
un débit d'écoulement à l'état fondu de la résine de polyoléfine dans la partie de gaine est de 10 à 60 g/10 min,
un débit d'écoulement à l'état fondu de la résine de polyoléfine dans la partie d'âme est inférieur au débit d'écoulement à l'état fondu de la résine de polyoléfine dans la partie de gaine, et
une différence entre le débit d'écoulement à l'état fondu de la résine de polyoléfine dans la partie d'âme et le débit d'écoulement à l'état fondu de la résine de polyoléfine dans la partie de gaine est de 4 à 45 g/10 min ;
dans laquelle le débit d'écoulement à l'état fondu a été mesuré conformément à la section « MFR (débit d'écoulement à l'état fondu) de résine » de la description.

**4.** Fibre de polyoléfine selon l'une quelconque des revendications 1 à 3, dans laquelle une résistance de boucle est de 4 à 8 cN/dtex ;
dans laquelle la résistance de boucle a été mesurée conformément à la section « Procédé de mesure de résistance de boucle, d'allongement de boucle à la rupture et de module élastique de boucle initial » de la description.

**5.** Fibre de polyoléfine selon l'une quelconque des revendications 1 à 4, dans laquelle
une finesse de fibre unique est de 3 à 25 dtex, et

une finesse totale est de 50 à 2 000 dtex.

**6.** Fibre de polyoléfine selon l'une quelconque des revendications 1 à 5, dans laquelle
une résistance à la traction est de 6 cN/dtex ou plus,
un module élastique de traction initial est de 70 cN/dtex ou plus, et
un allongement de nœud à la rupture est de 5 à 20 % ;
dans laquelle la résistance à la traction et le module élastique à la traction initial ont été mesurés conformément à la section « Procédé de mesure de résistance à la traction, d'allongement à la traction à la rupture et de module élastique à la traction initial » de la description ; et
dans laquelle l'allongement de nœud à la rupture a été mesuré conformément à la section « Procédé de mesure de force de nœud, d'allongement de nœud à la rupture et de module élastique de nœud initial » de la description.

**7.** Fibre de polyoléfine selon l'une quelconque des revendications 3 à 6, dans laquelle
un rapport de surface dans la partie d'âme dans une section transversale perpendiculaire à l'axe de fibre de la fibre composite âme-gaine est de 50 à 90 %.

**8.** Corde contenant 80 % en masse ou plus de la fibre de polyoléfine selon l'une quelconque des revendications 1 à 7.

**9.** Filet contenant 80% en masse ou plus de la fibre de polyoléfine selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0518316 A2
- JP H11269717 A
- JP H7316927 A

**Non-patent literature cited in the description**

- **KUMAR S et al.** Fibers from polypropylene/ nano carbon fiber composites. *POLYMER,* vol. 43 (5), 1701-1703